# EUROPÄISCHE PATENTSCHRIFT

(11) **EP 4 360 522 B1**
(45) Veröffentlichungstag und Bekanntmachung des Hinweises auf die Patenterteilung: **26.02.2025**
(21) Anmeldenummer: 23204143.4
(22) Anmeldetag: 17.10.2023
(51) Int. Cl.: A47K 11/02, B60R 15/04, B61D 35/00

(54) **TROCKENTRENNTOILETTE**
DRY-SEPARATION TOILET
TOILETTE SÈCHE À SÉPARATION

(30) Priorität: 24.10.2022 DE 102022127995; 25.11.2022 DE 102022131208
(43) Veröffentlichungstag der Anmeldung: 01.05.2024
(73) Patentinhaber: Siegle, Annette, 71679 Asperg (DE)
(72) Erfinder: Siegle, Annette, 71679 Asperg (DE)
(74) Vertreter: Jeck, Jonathan

(56) Entgegenhaltungen:
- EP-A1- 1 958 826
- WO-A1-2007/004169
- WO-A1-2020/146015
- US-A1- 2020 008 632

## Beschreibung

Die vorliegende Erfindung betrifft eine Trockentrenntoilette gemäß dem Anspruch 1. Solche Sanitäranlagen finden ihre Anwendung üblicherweise im Bereich der mobilen Unterbringung, insbesondere in Wohnwagen und Wohnmobilen.

Dem Fachmann sind Trockentrenntoiletten geläufig, bei welchen Flüssigkeiten und Feststoffanteile separat aufgefangen werden. Diese haben jedoch den strukturellen Nachteil, dass eine Kompatibilität zwischen den gegebenen Räumlichkeiten in der mobilen Unterbringung und der Trockentrenntoilette stark eingeschränkt ist. Eine freie Ausrichtung der Trockentrenntoilette beim Einbau in dem dafür vorgesehenen Bereich beispielsweise aufgrund der regelmäßig vorgesehenen Verbindung der Trockentrenntoilette zu einer über eine Klappe erreichbaren Entleerungsöffnung ist eingeschränkt.

Zwar sind Lösungen bekannt, bei denen eine getrennte Urinableitung über einen Schlauch in einen separaten Behälter vorgesehen ist, diese haben jedoch den Nachteil, dass dieser zum einen eine Drehbarkeit des Sitzteils einschränken kann und zum anderen dazu neigt auf Grund von lokalen Senken, den Urin nicht vollständig in den dafür vorgesehenen Behälter abzuführen.

Die EP 4 023 124 A1 ist auf eine Kassetten-Trockentrenntoilette gerichtet, die ein Gehäuse, ein Sitzschüsselteil und eine darunter, in einem Kassettenaufnahmeraum des Gehäuses befindliche Kassette aufweist, wobei das Sitzschüsselteil (2) sich aus einem vorderen Urinsammelabschnitt (4) mit einer Auslassöffnung (6) und einem hinteren Fäzes-Aufnahmeabschnitt (8) mit oberer und unterer Öffnung zusammensetzt, die Kassette eine Behälteranordnung (20) ist, die zur Unterbringung im Kassettenaufnahmeraum ausgestaltet ist und einen Fäzes-Behälter (22) mit einer oberen Öffnung (24) und einen Urintank (28) enthält, wobei die Behälteranordnung (20) so ausgestaltet ist, dass nach deren Einbringung in den Kassettenaufnahmeraum die obere Öffnung (24) des Fäzes-Behälters (22) unter der unteren Öffnung (10) des Fäzes-Aufnahmeabschnitts (8) liegt, wobei die Behälteranordnung (20) als integrales Bauteil oder als Einheit aus lösbar miteinander verbundenem Fäzes-Behälter (22) und Urintank (28) ausgebildet ist, und ein Schlauch die Auslassöffnung (6) des Urinsammelabschnitts des Sitzschüsselteils (2) mit einer Tanköffnung (30) des Urintanks (28) verbindet. Eine freie Drehbarkeit des Sitzteils ist nicht vorgesehen und für die Offenbarte Ausführung auch ungeeignet, da die Schlauchverbindung zum Urintank diese beschränkt. Des Weiteren wird es als nachteilig empfunden, dass ein Schlauch durch das Bilden von lokalen Senken dazu neigt, Urin unvollständig abzuführen, was zu einer zusätzlichen Geruchsbelästigung führen kann.

EP 90306719.7/ DE 69002 704 T2 betrifft eine Chemietoilette, mit einem Sitzteil mit einer einzelnen nach unten gerichteten Öffnung zum Abführen von Ausscheidungen und einem einzelnen darunter befindlichen Tank zur Aufnahme derselbigen. Zwar ist das Sitzteil drehbar ausgebildet, die Problematik einer zuverlässigen getrennten Abführung von Feststoffen und Urin wird jedoch schon grundsätzlich nicht beschrieben.

Einer Lösung zur verlässlichen getrennten Abführung von Ausscheidungen bei einem frei drehbaren Sitzteil ist kein Beitrag zu entnehmen.

DE 2458620 C2 beschreibt eine Toiletteneinrichtung zur Sammlung und Speicherung von Fäkalien, Abfällen usw. mit einem Gehäuse (3, 18), auf dem sich ein Sitz befindet, unter dem eine Toilettenschüssel (6) mit einer Durchtrittsöffnung (16} und wenigstens ein Sammelbehälter (4) angeordnet sind, wobei durch einen flachen Drehkörper (2) welcher im oberen Teil des Sammelbehälters (4) unterhalb der Durchtrittsöffnung (16) im Boden der Toilettenschüssel (6) angeordnet ist und derart bemessen ist, wobei er die Sicht durch die Durchtrittsöffnung (16) abdeckt, und welcher durch eine Antriebseinrichtung derart in Rotation versetzbar ist, dass er die aufgebrachten Fäkalien, Abfälle usw. abwirkt und in entsprechender Verteilung in den Sammelbehälter (4) befördert. Auch hier werden Feststoffe und Urin gemeinsam durch eine Öffnung in einen Sammelbehälter überführt, wobei der Urin nachträglich von den Feststoffen abgesondert und über Heizelemente verdampft wird.

US2020/008632 A1 sieht eine wasserlose Toilette vor, die flüssigen Abfall von festem Abfall trennt. Die Toilette hat einen vorderen Teil, der ein Urinal ist, und einen hinteren Teil, der eine Rutsche mit einer Bohrung ist.

Eine wie hier beschriebene Trockentrenntoilette mit einer separaten Öffnung für Urin, unter welche eine ringförmige Rinne vorgesehen ist, über welche der Urin in einen von den Feststoffen getrennten Behälter, zuverlässig und unabhängig von einer Drehposition des Sitzteils gegenüber dem Unterteil der Toilette abführbar ist, geht aus keiner der Druckschriften hervor.

Dies führt regelmäßig dazu, dass ein Sitzkomfort auf der Trockentrenntoilette stark eingeschränkt sein kann.

Diesen Nachteil möchte die vorliegende Erfindung beheben.

Die erfindungsgemäße Lösung dieses Problems besteht darin, eine Trockentrenntoilette mit einem Sitzteil mit einem Stützelement vorzusehen, wobei das Sitzteil zu einer Unterseite hin zwei räumlich getrennte und sich nach unten hin erstreckende Öffnungen zur getrennten Weiterleitung von Fäkalien aufweist, und mit einem Unterteil, oberhalb dessen das Sitzteil um eine vertikale Rotationsachse drehbar gelagert ist. Dabei weist das Unterteil zumindest einen ersten Auffangbehälter auf, welcher mit der ersten Öffnung des Sitzteils zur Aufnahme von Feststoffen in Verbindung steht, wobei ein unteres Ende der zweiten Öffnung entlang einer kreisförmigen Bahn um die Vertikalachse verlagerbar ist und wobei unterhalb des unteren Endes der zweiten Öffnung eine sich zumindest teilweise entlang der kreisförmigen Bahn erstreckende Rinne bereitgestellt ist. Diese weist zumindest zu einer Seite hin einen Ablauf zu einem zweiten Auffangbehälter zur getrennten Aufnahme von Flüssigkeiten auf.

Man erkennt, dass die Erfindung zumindest dann verwirklicht ist, wenn ein Sitzteil gegenüber einem Unterteil drehbar beweglich gelagert ist, und in dem Unterteil eine separate Ableitung für Flüssigkeiten vorgesehen ist. Diese Ableitung ist hinsichtlich ihrer Geometrie einer Bewegungsbahn einer Öffnung in dem Sitzteil bei einer Drehbewegung des Sitzteils nachempfunden.

Bevorzugte Ausführungen sind in den abhängigen Ansprüchen angegeben.

Nach einer Weiterbildung der vorliegenden Erfindung kann es vorgesehen sein, dass das Sitzteil um die Rotationsachse zumindest um 60°, vorzugsweise mindestens 90°, besonders bevorzugt mindestens 120°, mindestens 180° oder 360° drehbar gelagert ist.

Je nach den bestehenden räumlichen Bedingungen in der mobilen Unterbringung kann auch eine nur teilweise Drehbarkeit des Sitzteils ausreichend sein, um den Komfort für einen Benutzer maßgeblich zu erhöhen. Besonders bei einer Anordnung der erfindungsgemäßen Trockentrenntoilette in einer Raumecke kann es bereits ausreichend sein, das Sitzteil mit einer Drehbarkeit von ca. 90° oder weniger vorzusehen, also von maximal der parallelen Ausrichtung zu einer Wand drehbar bis maximal zur parallelen Ausrichtung der angrenzenden Wand. Zwar kann grundsätzlich eine erhöhte Drehbarkeit vorgesehen sein, dies wäre jedoch aufgrund der Ausrichtung des Sitzteils gegenüber den vorgesehenen Wänden keine Verbesserung bezüglich des Sitzkomforts in dem voranstehend beschriebenen Beispiel.

Nach einer bevorzugten Weiterbildung der vorliegenden Erfindung ist es vorgesehen, dass das untere Ende der zweiten Öffnung und das Sitzteil ihre Drehbewegungen um die Vertikalachse gemeinsam vollziehen. Grundsätzlich können das Sitzteil und die Öffnungen miteinander verbunden oder einstückig ausgebildet sein. Grundsätzlich können die Öffnungen auch als röhrenförmige Abschnitte bezeichnet werden, welche ein oberes und ein unteres Ende aufweisen. Dabei weist das untere Ende in Richtung des ersten Aufnahmebehälters beziehungsweise der Rinne und deren obere Enden in Richtung Sitzelement.

Nach einer zweckmäßigen Weiterbildung der vorliegenden Erfindung ist es vorgesehen, dass zumindest die zweite Öffnung trichterförmig ausgebildet ist und/oder sich zu deren unterem Ende hin verjüngt. Einer besonders effektiven Trennung von Flüssigkeit und Feststoff kann es zuträglich sein, dass die Flüssigkeiten über die zweite Öffnung gezielt in die Rinne geleitet werden. Die voranstehend beschriebene Geometrie kann den Ablauf von Flüssigkeiten in die Rinne begünstigen.

Nach einer besonders bevorzugten Weiterbildung der vorliegenden Erfindung ist es vorgesehen, dass der Durchmesser des unteren Endes der zweiten Öffnung kleiner oder gleich einer Breite der Rinne ist. Grundsätzlich kann es vorteilhaft sein, dass die Breite der Rinne und der Durchmesser der Öffnung aufeinander angepasst sind. Dies kann alternativ oder ergänzend zu einer sich verjüngenden Form oder Trichterform die Ableitung der Flüssigkeit in die Rinne weiter verbessern.

Nach einer besonders zweckmäßigen Weiterbildung der vorliegenden Erfindung ist es vorgesehen, dass sich die erste Öffnung im Wesentlichen vertikal erstreckt. Da die erste Öffnung insbesondere eine Verbindung zu dem ersten Aufnahmebehälter bildet, in welchem zweckmäßigerweise Feststoffe gesammelt werden können, kann es vorteilhaft sein, den Kontakt zwischen den Feststoffen und der Öffnung möglichst zu minimieren. Eine im Wesentlichen vertikale Form der, vorzugsweise röhrenförmigen Öffnung kann diesbezüglich den Kontakt der Feststoffe mit der Öffnung vermindern, was den Reinigungsaufwand des Sitzteils deutlich reduzieren kann.

Vorzugsweise ist es vorgesehen, dass die Rinne in Richtung des Ablaufs mit einer Neigung, also einer Schräge oder Gefälle, bereitgestellt ist. Da über die Rinne vorzugsweise Flüssigkeiten abgeleitet werden können, kann die Neigung dazu beitragen, die Flüssigkeiten aus der Rinne in dessen Ablauf besonders zuverlässig zuzuführen. Dies ist zwar für die Funktionalität nicht erforderlich, da Flüssigkeiten jedoch bei ebener Ausrichtung der Rinne dazu neigen, zumindest teilweise in der Rinne zu verbleiben, kann eine Neigung der Rinne insbesondere einer Geruchsbildung vorbeugen.

Zweckmäßigerweise ist es nach einer Weiterbildung der vorliegenden Erfindung vorgesehen, dass die erste Öffnung separat verschließbar ist. Dafür kann beispielsweise eine Klappe vorgesehen sein, welche als Teil des Sitzes ausgebildet sein kann und die ausschließliche Verwendung der Trockentrenntoilette über die zweite Öffnung ermöglicht, während die erste Öffnung durch die Klappe blockiert wird. Dies kann insbesondere einem Entweichen von Gerüchen aus dem ersten Auffangbehälter vorbeugen. Anstelle einer Klappe kann ein beliebiges Verschlusselement vorgesehen sein.

Eine Weiterbildung der vorliegenden Erfindung kann darin bestehen, dass der erste und der zweite Auffangbehälter separat ausgebildet sind. Üblicherweise sind die Volumina von Ausscheidungen in ihren flüssigen und festen Anteilen nicht zwingend gleich. Hieraus kann sich eine unterschiedliche Frequenz in der Entleerung der beiden Auffangbehälter ergeben. Das Vorsehen von 2 separaten Auffangbehältern kann hierbei die Entleerung von einzelnen Auffangbehältern erleichtern.

Nach einer zweckmäßigen Weiterbildung der vorliegenden Erfindung kann es vorgesehen sein, dass in einer Sitzrichtung des Sitzteils die erste Öffnung in einem hinteren Teil und zweite Öffnung in einem vorderen Teil des Sitzteils angeordnet ist. Dies entspricht grundsätzlich der Anatomie eines Benutzers, welcher sich in Sitzrichtung auf das Sitzteil setzt. Hierdurch kann in zuverlässiger Weise die Zuführung von ausgeschiedenen Flüssigkeiten durch die zweite Öffnung über die Rinne in den zweiten Auffangbehälter und die von Feststoffen durch die erste Öffnung in den ersten Auffangbehälter sichergestellt werden.

Die Rinne ist ringförmig, also kreisförmig ausgebildet. Grundsätzlich kann es jedoch ausreichend sein, wenn die Rinne nur ein Ringsegment beschreibt, welches bevorzugt der Größe (Kreisbahnabschnitt) und Ausrichtung nach der Rotationsfähigkeit des Sitzteils oder zumindest der für die betriebsgemäße Verwendung der Trockentrenntoilette sinnvollen Drehbewegung und deren Kreisabschnitt angepasst ist. Sofern die Trockentrenntoilette demnach im installierten Zustand, wie voranstehend beispielhaft beschrieben, in einer Raumecke angeordnet ist, und das Sitzteil nur benutzbar ist zwischen den parallelen Ausrichtungen des Sitzteils zu den beiden Wänden (90° Drehung), kann die Rinne auch in etwa 90° einer Kreisbahn beschreiben. Zu diesem Kreisbahnabschnitt kann noch der Teil hinzukommen, der für die Anordnung des Ablaufs erforderlich sein kann.

Nach einer besonders bevorzugten Weiterbildung der vorliegenden Erfindung kann es vorgesehen sein, dass sich der Ablauf schnabelförmig in Richtung zweitem Aufnahmebehälter erstreckt und/oder sich in Richtung einer Öffnung des zweiten Aufnahmebehälters hin verjüngt. Über eine möglichst kleine Öffnung des zweiten Auffangbehälters lässt sich das Entweichen von Gerüchen aus dem zweiten Auffangbehälter deutlich reduzieren. Ein entsprechender angepasster Ablauf, welcher zielgerichtet die Fluide an eine kleine Öffnung abgeben kann, kann somit der zuverlässigen Überführung der Fluide aus der Rinne in den Auffangbehälter dienen.

Zweckmäßigerweise kann es vorgesehen sein, dass die Rinne außen und/oder an einer Oberseite des Unterteils oder des ersten Aufnahmebehälters angeordnet ist. Grundsätzlich kann die Rinne mit dem ersten Aufnahmebehälter in Kontakt stehen oder an diesem angeordnet sein, da aufgrund der Ausrichtung der beiden Öffnungen im Sitzteil zueinander auch die Ausrichtung der Rinne und des ersten Auffangbehälters zueinander vorgegeben sein können. Hierzu kann die Rinne entweder mit dem ersten Auffangbehälter einstückig ausgebildet oder an diesem angeordnet, beispielsweise aufgesteckt sein. Grundsätzlich ist es jedoch denkbar, dass die Rinne unabhängig von dem ersten Aufnahmebehälter an dem oder in dem Unterteil selbst, beispielsweise an einer Gehäusestruktur des Unterteils, angeordnet sein kann, wodurch ein Entfernen des ersten Auffangbehälters unabhängig von der Rinne ermöglicht sein kann.

Bevorzugt kann es vorgesehen sein, dass die erste Öffnung in einer Draufsicht innerhalb der kreisförmigen Bahn (welche durch die Drehbewegung der zweiten Öffnung beschrieben wird) und/oder in einer Draufsicht innerhalb der durch die Rinne beschriebenen Ring (Segment)form angeordnet ist.

Zweckmäßigerweise kann es vorgesehen sein, dass die Rinne als Aufsatz des ersten Auffangbehälters ausgebildet ist.

Nach einer zweckmäßigen Weiterbildung der vorliegenden Erfindung ist vorgesehen, dass der Auffangbehälter unterhalb der ersten Öffnung angeordnet ist.

Die besondere Eigenschaft der Erfindungsgemäßen Rinne kann mit mindestens einem der folgenden Attribute beschrieben werden:
Die Rinne kann ortsfestsein. Die Rinne kann statisch sein. Die Rinne kann entlang einer Peripherie des Unterteils, insbesondere des ersten Auffangbehälters angeordnet sein. Die Rinne entlang einer Peripherie des erste Auffangbehälters angeordnet sein. Die Rinne ermöglicht vorzugsweise über einen Ablauf die Abgabe des Urins an einen getrennten Auffangbehälter (Urinbehälter) ohne einen Schlauch zur Verbindung vorsehen zu müssen.

Die Abflussöffnung der Rinne kann direkt über einer Öffnung des Urinbehälters angeordnet sein. Das getrennte Ableiten von Kot und Urin ist ermöglicht. Die Rinne ermöglich bevorzug eine Ableitung des Urins direkt zu einer / in eine Öffnung des Urinbehälters.

Die vorliegende Erfindung wird nachfolgend anhand der beigefügten Zeichnungen näher erläutert. Es zeigen:
- Figur 1: eine Querschnittsansicht durch eine Ausführungsform der vorliegenden Erfindung,
- Figur 2: eine perspektivische Explosionsdarstellung der Ausführungsform nach Figur 1 und
- Figur 3: eine Draufsicht auf eine Ausführungsform der Rinne und des zweiten Auffangbehälters der Trockentrenntoilette.

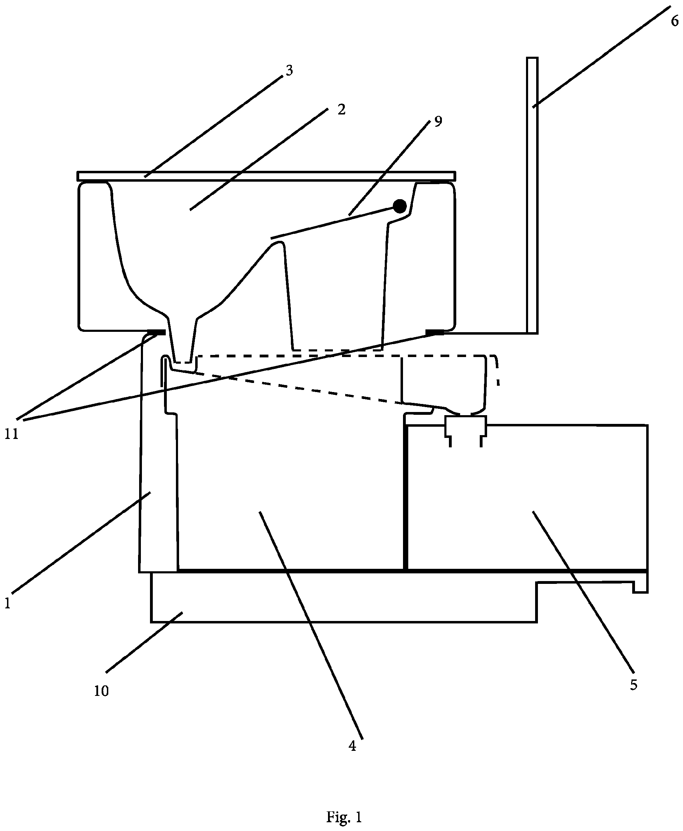

Figur 1 zeigt eine Querschnittsansicht einer Ausführungsform der erfindungsgemäßen Trockentrenntoilette mit einem Grundkörper 1, welcher auch als Unterteil bezeichnet werden kann. In dem Grundkörper kann ein Feststoffbehälter 4, welcher auch als erster Auffangbehälter bezeichnet werden kann, angeordnet sein. Oberhalb des Auffangbehälters kann das Sitzteil angeordnet sein, welches beispielsweise eine Trenneinsatzschale 2 aufweisen kann. Das Sitzteil kann auch als Trenneinsatzschale ausgebildet sein. Zum Verschließen der Trockentrenntoilette kann ein Deckel 3 vorgesehen sein, welcher die beiden Öffnungen in dem Sitzteil vollständig bedecken kann. Zum Verschließen der Öffnung, welche zum Feststoffbehälter 4 führt, kann eine Sichtschutzklappe 9 vorgesehen sein, welche unabhängig von einem Deckel 3 betätigbar ist. Die Öffnung in dem Sitzteil, welche zu dem Feststoffbehälter 4 führt, kann auch als erste Öffnung bezeichnet werden und ist vorzugsweise vertikal ausgerichtet. Die zweite Öffnung in dem Sitzteil, welche vorzugsweise zur Aufnahme und Weiterleitung von Flüssigkeiten, wie beispielsweise Urin, vorgesehen sein kann, ist bevorzugt sich nach unten hin verjüngend ausgebildet. Unterhalb der zweiten Öffnung kann eine Rinne 12, welche auch als Aufsatzring bezeichnet werden kann, vorgesehen sein. Diese Rinne 12 ermöglicht ein Abfließen von Flüssigkeiten in Richtung eines weiteren Auffangbehälters 5, welcher auch als Urinbehälter bezeichnet werden kann.

Das Sitzteil kann grundsätzlich gegenüber einem Unterbau, insbesondere dem Grundkörper 1 und/oder dem Feststoffbehälter 4, drehbar gelagert sein. Hierfür kann eine Drehkonsole 11 vorgesehen sein, auf welcher das Sitzteil aufliegen kann. Vorzugsweise ist die Drehkonsole an dem Grundkörper oder dem Feststoffbehälter 4 vorgesehen.

Die Ablaufrinne 12 ist gegenüber dem unteren Ende der zweiten Öffnung so angeordnet, dass bei einer Drehbewegung des Sitzteils das untere Ende der zweiten Öffnung stets oberhalb der Rinne angeordnet ist. Die Ablaufrinne kann mit einer Neigung bereitgestellt sein, über welche das Fluid besonders zuverlässig in den zweiten Auffangbehälter 5 ableitbar ist.

Im Beispiel nach Figur 1 ist die erfindungsgemäße Trockentrenntoilette an einer Seitenwand 6 angeordnet, in welche mindestens einer der Auffangbehälter über eine Öffnung in der Seitenwand 6 hinausragen kann. Zusätzlich oder alternativ hierzu kann an der Seitenwand 6 eine verschließbare Öffnung vorgesehen sein, über welche die Auffangbehälter von einer Rückseite der Seitenwand erreichbar sein können. Zur sicheren Anbringung der Trockentrenntoilette können das Sitzteil und der Grundkörper auf einer Grundplatte 10 befestigt sein, welche als Installationsbasis in einem dafür vorgesehenen Bereich einer mobilen Unterbringung, wie beispielsweise einem Wohnmobil, dienen kann.

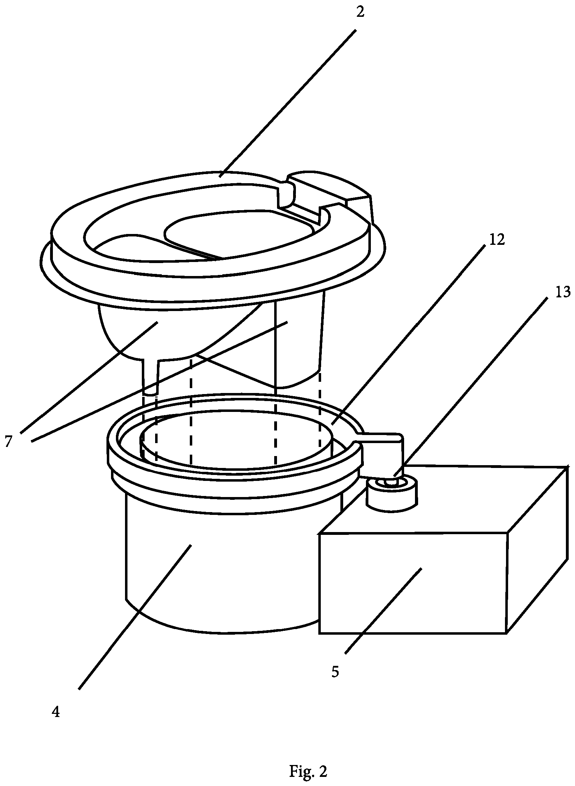

Figur 2 zeigt eine Explosionsdarstellung des Sitzteils gegenüber der Rinne 12 und den Auffangbehälter, aus welcher besonders deutlich ersichtlich ist, wie das untere Ende der zweiten Öffnung vorzugsweise schnabelförmig oberhalb der Rinne 12 angeordnet ist und während einer Drehbewegung des Sitzteils gegenüber der Rinne beziehungsweise dem Auffangbehälter 4 stets oberhalb der Rinne vorgesehen ist. Hierzu ist unabhängig von der horizontalen Ausrichtung des Sitzteils gegenüber der Rinne stets eine zuverlässige Ableitung von Fluiden über die zweite Öffnung in die Rinne ermöglicht. Die Rinne 12 weist mindestens eine Abflussöffnung 13, welche auch als Ablauf bezeichnet werden kann, auf. Über diese lässt sich das Fluid in den zweiten Aufnahmebehälter 5, also den Urinbehälter, über eine vorzugsweise kleine Öffnung desselbigen ableiten.

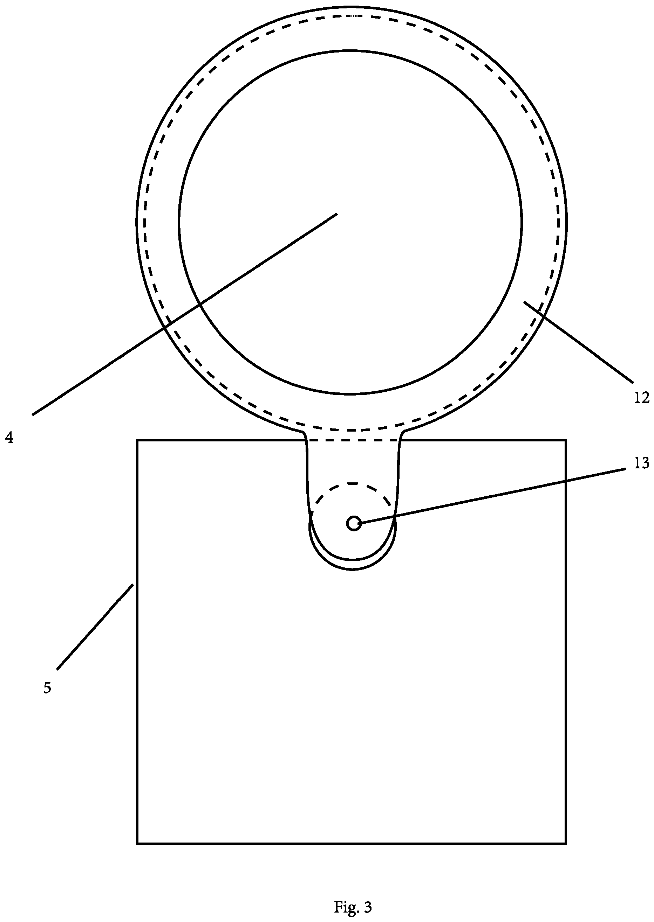

Gemäß der Draufsicht nach Figur 3 ist die vorzugsweise kreisförmige Rinne 12 mit ihrer Abflussöffnung 13 gegenüber dem zweiten Auffangbehälter so angeordnet, dass sich der Ablauf 13 oberhalb der Öffnung des zweiten Auffangbehälters 5 befindet.

### Bezugszeichenliste

Grundkörper (1)
Trenneinsatzschale (2)
Deckels (3)
Feststoffbehälter (4)
Urinbehälter (5)
Seitenwand (6)
Zwei nach unten gerichtete Öffnungen (7)
Sichtschutzklappe (9)
Grundplatte (10)
Drehkonsole (11)
Aufsatzring (12)
Abfluß-Öffnung (13)

## Patentansprüche

1. Trockentrenntoilette mit
einem Sitzteil mit einem Sitzelement, wobei das Sitzteil zu einer Unterseite hin zwei räumlich getrennte und sich nach unten hin erstreckende Öffnungen zur getrennten Weiterleitung von Fäkalien aufweist und
einem Unterteil (1), oberhalb dessen das Sitzteil um eine vertikale Rotationsachse drehbar gelagert ist,
wobei das Unterteil (1) zumindest einen ersten Auffangbehälter (4) aufweist, welcher mit der ersten Öffnung des Sitzteils zur Aufnahme von Feststoffen in Verbindung steht,
wobei ein unteres Ende der zweiten Öffnung entlang einer kreisförmigen Bahn um die vertikale Achse verlagerbar ist und
wobei unterhalb des unteren Endes der zweiten Öffnung eine sich zumindest teilweise entlang der kreisförmigen Bahn erstreckende ringförmige oder ringsegmentförmige Rinne (12) bereitgestellt ist, welche zumindest zu einer Seite hin einen Ablauf (13) zu einem zweiten Auffangbehälter (5) zur getrennten Aufnahme von Flüssigkeiten aufweist.

2. Trockentrenntoilette nach Anspruch 1,
**dadurch gekennzeichnet,**
**dass** das Sitzteil um die Rotationsachse zumindest um 60°, vorzugsweise mindestens um 90°, besonders bevorzugt mindestens um 120°, mindestens 180° oder 360°, insbesondere frei drehbar gelagert ist.

3. Trockentrenntoilette nach Anspruch 1,
**dadurch gekennzeichnet,**
**dass** das untere Ende der zweiten Öffnung und das Sitzteil ihre Drehbewegungen um die vertikale Achse gemeinsam vollziehen.

4. Trockentrenntoilette nach Anspruch 1,
**dadurch gekennzeichnet,**
**dass** zumindest die zweite Öffnung trichterförmig ausgebildet ist und/oder sich zu deren unterem Ende hin verjüngt.

5. Trockentrenntoilette nach Anspruch 1,
**dadurch gekennzeichnet,**
**dass** der Durchmesser des unteren Endes der zweiten Öffnung kleiner oder gleich einer Breite der Rinne (12) ist.

6. Trockentrenntoilette nach Anspruch 1,
**dadurch gekennzeichnet,**
**dass** der erste und der zweite Auffangbehälter (5) separat ausgebildet sind.

7. Trockentrenntoilette nach Anspruch 1,
**dadurch gekennzeichnet,**
**dass** in einer Sitzrichtung des Sitzteils die erste Öffnung in einem hinteren Teil und die zweite Öffnung in einem vorderen Teil des Sitzteils angeordnet sind.

8. Trockentrenntoilette nach Anspruch 1,
**dadurch gekennzeichnet,**
**dass** sich der Ablauf (13) schnabelförmig in Richtung zweiter Aufnahmebehälter erstreckt und/oder sich in Richtung einer Öffnung des zweiten Aufnahmebehälters hin verjüngt.

9. Trockentrenntoilette nach Anspruch 1,
**dadurch gekennzeichnet,**
**dass** die Rinne (12) außen und/oder an einer Oberseite des Unterteils (1) oder des ersten Auffangbehälters angeordnet ist.

10. Trockentrenntoilette nach Anspruch 1,
**dadurch gekennzeichnet,**
**dass** die Rinne (12) als Aufsatz des ersten Auffangbehälters ausgebildet ist.

## Claims

1. Dry separating toilet with
a seat part with a seat element, wherein the seat part has two spatially separate openings extending downwards towards an underside for separate forwarding of faeces and
a lower part (1), above which the seat part is mounted so as to be rotatable about a vertical axis of rotation,
wherein the lower part (1) comprises at least a first collecting container (4) communicating with the first opening of the seat part for receiving solids,
wherein a lower end of the second opening is displaceable along a circular path around the vertical axis, and
wherein an annular or annular-segmental channel (12) extending at least partially along the circular path is provided below the lower end of the second opening, which channel has, at least on one side, an outlet (13) to a second collecting container (5) for the separate collection of liquids.

2. Dry separating toilet according to claim 1,
**characterised in**
**that** the seat part is mounted so as to be freely rotatable about the axis of rotation by at least 60°, preferably at least 90°, particularly preferably at least 120°, at least 180° or 360°, in particular.

3. Dry separating toilet according to claim 1,
**characterised in**
**that** the lower end of the second opening and the seat part perform their rotational movements about the vertical axis together.

4. Dry separating toilet according to claim 1,
**characterised in**
**that** at least the second opening is designed to be funnel-shaped and/or tapers towards its lower end.

5. Dry separating toilet according to claim 1,
**characterised in**
**that** the diameter of the lower end of the second opening is smaller than or equal to a width of the channel (12).

6. Dry separating toilet according to claim 1,
**characterised in**
**that** the first and second collecting containers (5) are formed separately.

7. Dry separating toilet according to claim 1,
**characterised in**
**that**, in a sitting direction of the seat part, the first opening is arranged in a rear part and the second opening is arranged in a front part of the seat part.

8. Dry separating toilet according to claim 1,
**characterised in**
**that** the outlet (13) extends in the form of a spout in the direction of the second receiving container and/or tapers in the direction of an opening of the second receiving container.

9. Dry separating toilet according to claim 1,
**characterised in**
**that** the channel (12) is arranged on the outside and/or on an upper side of the lower part (1) or of the first collecting container.

10. Dry separating toilet according to claim 1,
**characterised in**
**that** the channel (12) is formed as a top piece of the first collecting container.

## Revendications

1. Toilette séparatrices à sec selon avec
une partie de siège avec un élément de siège, la partie de siège présentant vers une face inférieure deux ouvertures séparées dans l'espace et s'étendant vers le bas pour l'acheminement séparé des matières fécales et
une partie inférieure (1), au-dessus de laquelle l'élément de siège est monté de manière à pouvoir tourner autour d'un axe de rotation vertical,
la partie inférieure (1) comprenant au moins un premier récipient collecteur (4) qui communique avec la première ouverture de la partie de siège pour recevoir les matières solides,
une extrémité inférieure de la deuxième ouverture pouvant être déplacée le long d'une trajectoire circulaire autour de l'axe vertical, et
une rigole annulaire ou en forme de segment d'anneau (12) s'étendant au moins partiellement le long de la trajectoire circulaire étant prévue en dessous de l'extrémité inférieure de la deuxième ouverture, laquelle présente au moins d'un côté une sortie (13) vers un deuxième récipient collecteur (5) pour la réception séparée de liquides.

2. Toilette séparatrices à sec selon la revendication 1,
**caractérisé en ce que**
que la partie siège est montée de manière à pouvoir tourner autour de l'axe de rotation au moins de 60°, de préférence au moins de 90°, de manière particulièrement préférée au moins de 120°, au moins de 180° ou 360°, en particulier librement.

3. Toilette séparatrices à sec selon la revendication 1,
**caractérisé en ce que**
que l'extrémité inférieure de la deuxième ouverture et l'élément de siège effectuent ensemble leurs mouvements de rotation autour de l'axe vertical.

4. Toilette séparatrices à sec selon la revendication 1,
**caractérisé en ce que**,
qu'au moins la deuxième ouverture est en forme d'entonnoir et/ou se rétrécit vers son extrémité inférieure.

5. Toilette séparatrices à sec selon la revendication 1,
**caractérisé en ce que**
le diamètre de l'extrémité inférieure de la deuxième ouverture est inférieur ou égal à une largeur de la gouttière (12).

6. Toilette séparatrices à sec selon la revendication 1,
**caractérisé en ce que**
que le premier et le deuxième récipient de collecte (5) sont formés séparément.

7. Toilette séparatrices à sec selon la revendication 1,
**caractérisé en ce que**
**en ce que**, dans une direction d'assise de la partie d'assise, la première ouverture est située dans une partie arrière et la deuxième ouverture est située dans une partie avant de la partie d'assise.

8. Toilette séparatrices à sec selon la revendication 1,
**caractérisé en ce que**
que l'écoulement (13) s'étend en forme de bec en direction du deuxième récipient de réception et/ou se rétrécit en direction d'une ouverture du deuxième récipient de réception.

9. Toilette séparatrices à sec selon la revendication 1,
**caractérisé en ce que**
que la gouttière (12) est disposée à l'extérieur et/ou sur une face supérieure de la partie inférieure (1) ou du premier récipient collecteur.

10. Toilette séparatrices à sec selon la revendication 1,
**caractérisé en ce que**
**en ce que** la goulotte (12) est réalisée sous la forme d'un chapeau du premier récipient collecteur.
